# EUROPÄISCHE PATENTANMELDUNG

(11) **EP 1 074 439 A2**
(43) Veröffentlichungstag der Anmeldung: **07.02.2001**
(21) Anmeldenummer: 00116782.4
(22) Anmeldetag: 03.08.2000
(51) Int. Cl.: B60R 22/44, B60R 22/46

(54) **Rückhaltevorrichtung für ein Kraftfahrzeug**

(30) Priorität: 04.08.1999 DE 19936627
(71) Anmelder: Breed Automotive Technology, Inc., Lakeland, Florida 33807-3050 (US)
(72) Erfinder: Specht, Martin, Dipl.-Ing. (FH), 82340 Feldafing (DE)
(74) Vertreter: Nöth, Heinz, Dipl.-Phys.

(57) **Zusammenfassung**

Rückhaltevorrichtung für ein Kraftfahrzeug mit einem Gurtaufroller, einem aufblasbaren Sicherheitsgurt, der auf eine Gurtspule des Gurtaufrollers auf- und von dieser abwickelbar ist, und einer Triebfeder, welche die Gurtspule in Gurtbandaufwickelrichtung vorspannt, dadurch gekennzeichnet, dass die Vorspannkraft der Triebfeder (12) durch einen Elektromotor (4) in Abhängigkeit von der Gurtbandauszugslänge einstellbar ist.

## Beschreibung

Die Erfindung betrifft eine Rückhaltevorrichtung für ein Kraftfahrzeug nach dem Oberbegriff des Patentanspruches 1.

### [Stand der Technik]

Eine derartige Rückhaltevorrichtung ist aus der WO 97/06983 bekannt. Die bekannte Rückhaltevorrichtung besitzt einen im Beckengurtbereich aufblasbaren Sicherheitsgurt, wobei im Schultergurtbereich und der auf einem Gurtaufroller aufwickelbare Teil des Sicherheitsgurtes aus einen herkömmlichen nicht aufblasbaren Gurtband gebildet wird. Ferner ist aus der DE 43 26 499 A1 bekannt, den aufblasbaren Schultergurt und den aufblasbaren Beckengurt auf jeweils zugeordnete Gurtaufroller aufzuwickeln. Die für die jeweilige Rückhaltevorrichtung erforderlichen Gurtbandstücke können von einem einheitlichen Gurtband abgelängt werden, jedoch ist der Aufwand zweier Gurtaufroller erforderlich, um den mehrlagigen Sicherheitsgurt in die Parkposition aufzuwickeln.

Der aufblasbare Sicherheitsgurt hat aufgrund seiner Mehrlagigkeit eine größere Banddicke als ein einlagiger herkömmlicher Sicherheitsgurt. Der Gurtbandwickeldurchmesser auf der Gurtspule wird hierdurch größer. Hieraus resultiert ein größerer Filmspuleffekt und beim Auf- und Abwickeln hat der aufblasbare Sicherheitsgurt ein von den herkömmlichen Sicherheitsgurten abweichendes Verhalten. An den Tragekomfort und Aufwickelkomfort werden jedoch bestimmte Anforderungen gestellt, die beim herkömmlichen Sicherheitsgurten in aller Regel erfüllt sind.

### [Aufgabe der Erfindung]

Aufgabe der Erfindung ist es, eine Rückhaltevorrichtung der eingangs genannten Art zu schaffen, bei welcher über die gesamte Länge hin ein einheitliches aufblasbares Gurtband für den Sicherheitsgurt verwendet wird, das auf einem Gurtaufroller aufgewickelt werden kann.

Diese Aufgabe wird erfindungsgemäß durch die kennzeichnenden Merkmale des Patentanspruches 1 gelöst.

Bei der Erfindung ist ein Elektromotor vorgesehen, der in Abhängigkeit von der Gurtbandauszugslänge so über die Triebfeder auf die Gurtspule einwirkt, dass eine bestimmte am Gurtband wirkende Zugkraft in Aufwickelrichtung vorliegt. Hierdurch kann der Tragekomfort des angelegten Sicherheitsgurtbandes, wie er bei herkömmlichen Sicherheitsgurtbändern erreicht wird, erzielt werden. Ferner kann zum Aufwickeln des Gurtbandes auf die Gurtspule des Gurtaufrollers eine erhöhte Zugkraft auf das Gurtband ausgeübt werden, um dieses in seine Parkposition zu bringen. Das Aufbringen der erhöhten Einzugskraft kann in Abhängigkeit von dem Lösen der Steckzunge aus dem Gurtschloss veranlasst werden. Hierzu kann eine Gurtschlossüberwachungseinrichtung vorgesehen sein, welche erkennt, ob die Schlosszunge in das Gurtschloss eingesteckt ist oder nicht. Derartige Überwachungseinrichtungen sind bekannt (DE 43 27 989 A1 oder DE 198 36 197 A1).

Ferner kann der Betrieb des Elektromotors in Abhängigkeit von der Zugkraft gesteuert werden, welche an dem am Fahrzeuginsassen anliegenden Gurtband (Schulter- und Beckengurt) wirkt. Es kann hierzu eine entsprechende Abtasteinrichtung oder Sensoreinrichtung vorgesehen sein. Auf diese Weise lässt sich eine Auszugs- und Einzugshysterese der auf das aufblasbare Gurtband einwirkenden Zugkraft erzielen, wie sie bei herkömmlichen Sicherheitsgurten mit Tragekomfort und Aufwickelkomfort für jeweilige Fahrzeugtypen erreicht wird.

Ferner kann der zusätzliche Filmspuleffekt, welcher sich aus der Mehrlagigkeit des aufblasbaren Gurtbandes ergibt, mit Hilfe des Elektromotors in Zusammenwirkung mit einem Precrash-Sensor beseitigen. Ein herkömmlicher Precrash-Sensor liefert 200 ms vor Crashbeginn ein Precrash-Signal. Dieses kann zur Steuerung des Elektromotors dahingehend ausgenützt werden, dass der noch nicht aufgeblasene Sicherheitsgurt durch den Elektromotor vorgestrafft wird, so dass der Filmspuleffekt beseitigt ist. Dieser Vorgang ist reversibel, d.h. wenn kein Unfall stattfindet, wird nach einem bestimmten Zeitablauf die Zugkraft am angelegten Gurtband wieder so eingestellt, dass der gewünschte Tragekomfort vorhanden ist. Bei der Vorstraffung wird dem Fahrzeuginsassen ein spürbares Sicherheitsgefühl durch die gegenüber dem Tragekomfort erhöhte Zugkraft, welche am angelegten Gurtband wirkt, vermittelt.

Ferner kann der Betrieb des Elektromotors in Abhängigkeit von einem Zweitunfallsensor und/oder Überrollsensor zur Straffung des Sicherheitsgurtbandes, welches aufgrund des Aufblasens verbreitert ist, gesteuert werden. Hierdurch wird, beispielsweise bei einem Überroll- oder Zweitunfallgeschehen, der mit verbreiteter Auflagefläche (ca. 140 mm Breite) am Fahrzeuginsassen anliegende Sicherheitsgurt gestrafft, so dass der Fahrzeuginsasse in seiner Sitzposition gesichert wird.

Ein geeigneter Elektromotor ist als Flachmotor ausgebildet, wie er beispielsweise aus der DE 43 02 042 A1 bekannt ist. In bevorzugter Weise ist ein derartiger Elektromotor mit seinem Rotor koxial zur Gurtspulenachse des Gurtaufrollers am Gurtaufrollerrahmen seitlich angeordnet. Hierzu kann ein Statorpolträger am Rahmen des Gurtaufrollers abgestützt sein und gegebenenfalls aus einem Stück mit dem Rahmen bestehen. Dadurch, dass die axiale Ausdehnung der den Rotor und Stator enthaltenden Baueinheit kürzer bemessen ist als der Außendurchmesser lässt sich eine kompakte Anordnung des Elektromotors am Gurtaufroller erzielen. In bevorzugter Weise wirkt der Elektromotor parallel oder in Reihenanordnung mit einer herkömmlichen Triebfeder, die an der Gurtspule angreift, zusammen. Der Elektromotor ist in bevorzugter Weise als bürstenloser Gleichstrommotor ausgebildet, bei welchem die Rotorpole als Permanentmagnete vorliegen. Ein Untersetzungsgetriebe kann bevorzugt im Innern des Stators angeordnet sein (DE 43 02 042 A1). Es bringt die hohe Rotordrehzahl auf solche Drehzahlen, wie sie für die oben angesprochenen Funktionen am Gurtaufroller erwünscht sind. Der Elektromotor kann jedoch auch ohne Untersetzungsgetriebe zum Einsatz kommen. Der Elektromotor kann mit seiner Läuferwelle auch parallel zur Gurtspulenachse angeordnet sein und über ein Getriebe (Zahnrad, Riemen, Band etc.) auf einen drehbar und koaxial zur Gurtspulenachse am Gurtaufrollerrahmen gelagerten Rotor wirksam sein, wie es in der DE 199 27 731 A1 beschrieben ist.

Hierdurch ist es möglich, eine Rückhaltevorrichtung mit einem aufblasbaren Sicherheitsgurt zu schaffen, bei welchem der Sicherheitsgurt in seiner gesamten Länge einheitlich ausgebildet ist, so dass er von einem Gurtband abgelängt werden kann. Ferner reicht für die Rückhaltevorrichtung ein Gurtaufroller aus, mit welchem der aufblasbare Sicherheitsgurt im Normalbetrieb den Tragekomfort und Aufwickelkomfort eines herkömmlichen Sicherheitsgurtes gewährleistet und in bestimmten Gefahrensituationen eine zusätzliche Sicherheit bietet.

### [Beispiele]

Anhand der Figuren wird an einem Ausführungsbeispiel die Erfindung noch näher erläutert.

Es zeigt:
- Fig. 1: eine Seite eines Sicherheitsgurtaufrollers mit einem Elektromotor für den Antrieb der Gurtspule; und
- Fig. 2: ein Blockschaltbild der Steuereinrichtung für den Elektromotor.

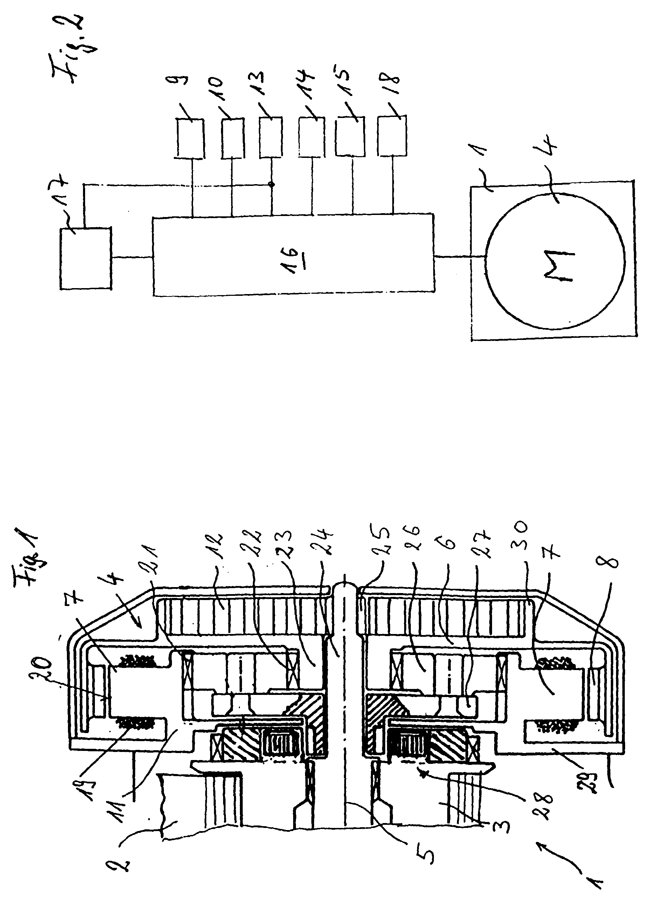

Ein in der Fig. 1 dargestellter Gurtaufroller 1 ist Bestandteil eines Ausführungsbeispiels der Rückhaltevorrichtung nach der Erfindung, wie sie schematisch in der Fig. 2 dargestellt ist. Dieser Gurtaufroller besitzt eine Gurtspule 3 für einen aufblasbaren Sicherheitsgurt. Der aufblasbare Sicherheitsgurt 2 ist beispielsweise so ausgebildet, wie es in der DE 198 04 365 A1 beschrieben ist. Das Gurtband, aus welchem dieser Sicherheitsgurt 2 gebildet wird, ist durchgehend einheitlich ausgebildet, so dass es von einem langen Gurtband in der für den Gurtaufroller erforderlichen Länge abgelängt werden kann. Die Gurtspule ist drehfest mit einem Lagerbolzen 24 verbunden, auf welchen ein Rotor 6 eines Elektromotors 4 drehbar gelagert ist. Der Elektromotor 4 ist seitlich am Rahmenblech eines Rahmens 29, welcher in bekannter Weise etwa U-förmig ausgebildet sein kann, befestigt. Hierzu ist ein Statorträger 11, welcher Statorpole 7 des Elektromotors 4 trägt, am Gurtaufrollerrahmen 29 abgestützt. Er kann mit dem seitlichen Rahmenblech des Gurtaufrollerrahmens 29 auch einstückig hergestellt sein. Der Statorträger 11 hält die Statorpole 7, welche in Form von lamellierten Polblechen vorliegen können. Um diese Polbleche sind in bekannter Weise Feldwicklungen 19 gewickelt. Die Statorpole liegen auf einem innenliegenden Radius um eine gemeinsame Achse 5 mit Rotorpolen 8, welche auf einem äußeren Radius an der Innenseite eines haubenförmigen Rotors 6 angeordnet sind. Die Rotorpole 8 bestehen aus Permanentmagneten. Zwischen den Rotorpolen 8 und den Statorpolen 7 kann in bevorzugter Weise ein Gleitlager 20 vorgesehen sein, welches auch für den erforderlichen Abstand zwischen den Rotor- und Statorpolen sorgt.

Die gemeinsame Achse 5 verläuft koaxial zur Achse der Gurtspule 3. Dadurch, dass die axiale Ausdehnung des Elektromotors 4 wesentlich geringer dimensioniert ist als sein Durchmesser, erreicht man eine Flachbauweise des Elektromotors 4, welcher in kompakter Weise am seitlichen Rahmenschenkel des Gurtaufrollerrahmens 29 befestigt ist. In vorteilhafter Weise kann der drehfest mit der Gurtspule 3 verbundene Lagerbolzen 24 zusammen mit einem Lagerbund 23 am Rotor 6 die Drehlagerung des Rotors 6 und der daran befestigten Rotorpole 8 gewährleisten. Der Lagerbolzen 24, welcher in radialer Richtung über das seitliche Rahmenblech des Gurtaufrollerrahmens 29 hinausragt, kann, wie es in der DE 199 27 731 A1 beschrieben ist, ein Lagerfortsatz sein, welcher am als Torsionsstab ausgebildeten Lastbegrenzer des Gurtaufrollers gebildet wird.

Der Statorträger 11 ist ringförmig ausgebildet. Im Innern des Ringes befindet sich ein Planetengetriebe bestehend aus Planetenrädern 26, die drehbar an einem Planetenträger 27 gelagert sind. Der Planetenträger 27 ist um die gemeinsame Achse 5, welche von dem Lagerbolzen 24 gebildet wird, drehbar gelagert. Die Planetenräder 26 kämmen mit einem am Rotor 6 insbesondere dem Lagerbund 23 vorgesehenen Sonnenrad 22. An der Innenseite des ringförmigen Statorträgers 21 ist ein Hohlrad 21 vorgesehen, mit dem die Planetenräder 26 ebenfalls kämmen. Die Drehung des Rotors 6 wird über dieses Planetengetriebe mit Untersetzung auf den Planetenträger 27 übertragen. Die Drehung des Planetenträgers 27 kann über eine Kupplung 28, wie sie in der DE 196 47 841 A1 oder der DE 199 27 731 A1 beschrieben ist, auf die Gurtspule 3 zur Variation einer Lastbegrenzung übertragen werden, wie im einzelnen noch erläutert wird. Der Elektromotor kann jedoch auch ohne das Planetengetriebe zum Einsatz kommen.

Eine Triebfeder 12 befindet sich in einer Ausnehmung des haubenförmigen Rotors 6. Hierzu ist an den Rotor 6 an seiner Außenseite eine Federkassette 30 angeformt. An ihrem äußeren Ende greift die Triebfeder 12 an der Federkassette 30 an. Hierzu kann in bekannter Weise ein entsprechender Einhängepunkt vorgesehen sein. An ihrer Innenseite greift die Triebfeder 12 an einem drehfest mit dem Lagerbolzen 24 verbundenen Federherz 25 an. Durch die Triebfeder 12 wird in bekannter Weise die Gurtspule 3 und der mit ihr verbundene Sicherheitsgurt 2 in Aufwickelrichtung vorgespannt. Hierzu kann sich die Feder 12 an dem zwischen den Statorpolen und Rotorpolen wirkenden Haltemoment abstützen. Es kann jedoch auch eine mechanische Verrastung zwischen Rotor und Stator wirken, wenn nur die Triebfeder wirksam ist.

Wie in der DE 199 27 731 A1 beschrieben, kann die Triebfeder zwischen dem Planetengetriebe und der federseitigen Stirnfläche der Gurtspule 3 angeordnet sein. Hierbei kann die Federkassette aus einem Stück mit dem Planetenträger 27 gebildet sein. Bei dieser Ausführungsform wird das vom Elektromotor 4 erzeugte Drehmoment auf den äußeren Einhängepunkt der Triebfeder übertragen. Ferner kann der Elektromotor auch in der Weise angeordnet sein, dass seine Läuferwelle (Ausgangswelle) etwa parallel zur Gurtspulenachse 5 verläuft. Die Ausgangswelle des Elektromotors kann dann über ein Getriebe, welches als Zahnradgetriebe, Zugmittelgetriebe oder dergleichen ausgebildet sein kann, mit einem drehbar am Gurtaufrollerrahmen 29 gelagerten Rotor verbunden sein. Dieser Rotor kann ebenfalls haubenförmig ausgebildet sein, wie der in Fig. 1 dargestellte Rotor 6. Ferner kann dieser Rotor koaxial zur Gurtspulenachse 5 gelagert sein. Auch diese Ausführungsform ist in der DE 199 27 731 A1 beschrieben.

Aus der Fig. 2 ist zu ersehen, dass der Betrieb des Motors 4 durch eine Steuereinrichtung 16 eingestellt werden kann. Hierzu sind mit der Steuereinrichtung verschiedene Sensoren und Überwachungseinrichtungen verbunden, welche entsprechende Signale liefern. In Abhängigkeit dieser Signale erfolgt die Steuerung des Motors 4.

An die Steuereinrichtung ist eine erste Abtasteinrichtung 9 angeschlossen, welche zum Abtasten der Auszugslänge des Sicherheitsgurtes 2 dient. In Abhängigkeit von dieser Auszugslänge wird an die Steuereinrichtung 16 ein proportionales Auszugslängensignal geliefert. Die Abtasteinrichtung 9 kann am Gurtaufroller 1, im Elektromotor 4 oder einer anderen geeigneten Stelle vorgesehen sein. Ferner ist mit der Steuereinrichtung 16 eine Gurtschlossüberwachungseinrichtung 15 verbunden. Hierdurch kann erkannt werden, ob ein Sicherheitsgurt in ein zugehöriges Gurtschloss mit seiner Steckzunge eingesteckt ist oder nicht. Wenn der Sicherheitsgurt aus seiner Parkposition, d.h. aus der vollständig auf die Gurtspule 3 aufgewickelten Position in eine angegurtete Position gebracht wird, wird der Auszug des Sicherheitsgurtes von der ersten Abtasteinrichtung 9 erkannt. Hierbei kann der Motor 4 in der Weise gesteuert werden, dass er die Einzugskraft der Triebfeder 12 verringert. Von der Gurtschlossüberwachungseinrichtung 15 wird erkannt, wenn die Einsteckzunge des Sicherheitsgurtes in das Gurtschloss eingesteckt ist. Bei angelegtem Sicherheitsgurt kann dann der Elektromotor so angesteuert sein, dass die Vorspannung der Triebfeder 12 verringert wird. Der Sicherheitsgurt liegt dann mit verminderter Zugkraft am Körper des Fahrzeuginsassen an. Es wird hierdurch ein entsprechender Tragekomfort des Sicherheitsgurtes erreicht.

Beim Lösen der Steckzunge aus dem Gurtschloss wird dies von der Gurtschlossüberwachung 15 festgestellt und ein entsprechendes Signal an die Steuereinrichtung 16 abgegeben. Der Elektromotor 4 kann dann in der Weise angesteuert werden, Elektromotor 4 kann dann in der Weise angesteuert werden, dass er eine erhöhte Vorspannung der Triebfeder 12 erzeugt und damit eine vergrößerte Zugkraft in Aufwickelrichtung auf den Sicherheitsgurt ausgeübt wird. Das aufblasbare Gurtband des Sicherheitsgurtes 2 wird damit sicher in die Parkposition gebracht. Es wird hierzu vom Elektromotor 4 das erforderliche Drehmoment erzeugt, um das aufblasbare Sicherheitsgurtband in die Parkposition zu bringen. Es kann eine Triebfeder zum Einsatz kommen, die gegenüber gebräuchlichen Triebfedern eine erhöhte Federkraft aufweist. Es ist jedoch auch möglich, dass der Elektromotor parallel zur Triebfeder an die Gurtspule, beispielsweise durch entsprechende Ausbildung der Kupplung 28 ankoppelbar ist. Vom Elektromotor kann dann eine erhöhte Zugkraft in Aufwickelrichtung über die Gurtspule 3 auf den aufblasbaren Sicherheitsgurt ausgeübt werden. Auch hierdurch wird gewährleistet, dass das aufblasbare Gurtband des Sicherheitsgurtes 2 sicher in die Parkposition gebracht wird. Der Elektromotor 4 erzeugt dabei das erforderliche Drehmoment.

Der Elektromotor 4 kann ferner in Abhängigkeit von einem Precrash-Sensor 13 angesteuert werden. Der Precrash-Sensor 13 liefert ca. 200 ms vor Crashbeginn ein Precrash-Signal. Durch dieses Precrash-Signal wird der Elektromotor 4 von der Steuereinrichtung 16 so betrieben, dass im Sinne einer Vorstraffung ein Drehmoment auf die Gurtspule 3 übertragen wird. Hierdurch wird ein Teil des nicht aufgeblasenen Gurtbandes auf die Gurtspule 3 aufgewickelt. Durch diese Vorstraffung des nicht aufgeblasenen Sicherheitsgurtes wird eine spürbare Sicherheit dem Fahrzeuginsassen vermittelt. Dieser Vorgang der Vorstraffung ist reversibel. Wenn kein Unfall stattfindet, wird die Steuereinrichtung 16 durch ein von einem Zeitglied 17 geliefertes Zeitsignal beaufschlagt. Durch dieses Zeitsignal wird der Elektromotor 4 so angesteuert, dass das für die Vorstraffung erhöhte Drehmoment, welches auf die Gurtspule 3 wirkt, verringert wird und durch Drehen des Rotors 6 in entgegengesetzter Richtung aufgewickeltes Gurtband in Auszugsrichtung nachgelassen wird. Es wird dann der vor dem Precrash-Signal herrschende Tragekomfort wieder hergestellt. Wenn ein Unfall stattfindet, wird dieser von einem Crash-Sensor 18 festgestellt. In diesem Fall wird die vorn Elektromotor 4 bewirkte Vorstraffung beibehalten. Zur Leistungsstraffung kann der Elektromotor 4 im Sinne eines weiteren Gurteinzugs angetrieben werden. Gleichzeitig kann auch ein Gurtschlossstraffer durch das Signal des Crash-Sensor 18 gezündet werden. Bei der Vorstraffung oder Leistungsstraffung durch den Elektromotor 4 ist die Triebfeder 12 auf Block gewickelt und stellt ein starres Verbindungselement zwischen dem Rotor 6 und der Gurtspule 3 dar.

Ferner kann der Elektromotor 4 durch die Steuereinrichtung 16 in Abhängigkeit von einem Überroll- oder Zweitunfallsensor 14 angesteuert werden. Dieser Sensor liefert nach einem vorausgegangenen Crash bei einem zweiten Crash oder einem Überrollen des Fahrzeugs ein Folgesignal. Durch dieses Signal wird eine Straffung des Gurtbandes, welches mit verbreiteter Auflagefläche aufgrund der vorherigen Füllung des Sicherheitsgurtes am Körper des Fahrzeuginsassen anliegt, erreicht. Diese Gurtstraffung, welche vom Überroll- oder Zweitunfallsensor 14 veranlasst wird, ist insbesondere dann begünstigt, wenn das Gurtband über einen Umlenkbeschlag oberhalb Schulterhöhe des Fahrzeuginsassen zum Gurtaufroller 1 geführt wird. Der Teil des Gurtbandes, welcher sich zwischen den Umlenkbeschlag und dem Gurtaufroller 1 erstreckt, wird in aller Regel aufgrund der Knickstelle im Umlenkbeschlag nicht gefüllt. Die Erfindung kommt daher bevorzugt bei einem Dreipunkt-Sicherheitsgurt zum Einsatz, bei dem das Gurtband vom Gurtaufroller 1 zu einem Umlenkbeschlag in etwa Schulterhöhe des Fahrzeuginsassen geführt ist und von dort als Schultergurt zum Gurtschloss und vom Gurtschloss als Beckengurt zum Endbeschlag am Fahrzeugaufbau weitergeführt ist.

Der Elektromotor 4 wirkt beim Einstellen des Auf- und Abwickelkomforts sowie beim Gurtstraffen in Reihenanordnung mit der Triebfeder 12 auf die Gurtspule 3. Es ist jedoch auch möglich, den Elektromotor 4 unter Ausschaltung bzw. Überbrückung der Triebfeder 12 mit einem beim lastbegrenzenden Gurtbandauszug beweglichen Teil der Gurtspule 3 zu verbinden. Das Einrücken der Kupplung 28 erfolgt beim Blockieren der Gurtspule, wobei durch die Blockierung während des lastbegrenzenden Gurtbandauszugs ein Gurtspulenteil festgehalten wird. Zur Änderung der Lastbegrenzung kann das Drehmoment des Elektromotors additiv oder substraktiv zum Lastbegrenzer auf die Gurtspule einwirken. Der Lastbegrenzer kann als Torsionsstab ausgebildet sein und sich durch einen Hohlraum der Gurtspule 3 erstrecken. Der Lagerbolzen 24 kann beispielsweise einstückig mit dem Torsionsstab verbunden sein. Eine derartige Anordnung ist in der DE 199 27 731 A1 beschrieben. Es ist jedoch auch möglich, das die Triebfeder 12 und der Elektromotor 4 parallel mit der Gurtspule 3 verbindbar oder verbunden sind, wie es ebenfalls in der DE 199 27 731 A1 beschrieben ist.

### [Bezugszeichenliste]

- 1: Gurtaufroller
- 2: Sicherheitsgurt
- 3: Gurtspule
- 4: Elektromotor
- 5: Gurtspulenachse
- 6: Rotor
- 7: Statorpol
- 8: Rotorpol
- 9: erste Abtasteinrichtung
- 10: zweite Abtasteinrichtung
- 11: Statorpolträger
- 12: Triebfeder
- 13: Precrash-Sensor
- 14: Überroll- oder Zweitunfallsensor
- 15: Gurtschlossüberwachung
- 16: Steuereinrichtung
- 17: Zeitglied
- 18: Crash-Sensor
- 19: Feldwicklung
- 20: Gleitlager
- 21: Hohlrad
- 22: Sonnenrad
- 23: Lagerbund
- 24: Lagerbolzen
- 25: Federherz
- 26: Planetenrad
- 27: Planetenträger
- 28: Kupplung
- 29: Gurtaufrollerrahmen
- 30: Federkassette

## Patentansprüche

1. Rückhaltevorrichtung für ein Kraftfahrzeug mit einem Gurtaufroller, einem aufblasbaren Sicherheitsgurt, der auf eine Gurtspule des Gurtaufrollers auf- und von dieser abwickelbar ist, und einer Triebfeder, welche die Gurtspule in Gurtbandaufwickelrichtung vorspannt, dadurch gekennzeichnet, dass die Vorspannkraft der Triebfeder (12) durch einen Elektromotor (4) in Abhängigkeit von der Gurtbandauszugslänge einstellbar ist.

2. Rückhaltevorrichtung nach Anspruch 1, dadurch gekennzeichnet, da eine erste Abtasteinrichtung (9) zur Abtastung der Gurtbandauszugslänge vorgesehen ist und dass in Abhängigkeit von der Gurtbandauszugslänge der Elektromotor (4) zur Einstellung einer bestimmten am Gurtband wirkenden Zugkraft in Aufwickelrichtung angesteuert ist.

3. Rückhaltevorrichtung nach Anspruch 2, dadurch gekennzeichnet, dass die erste Abtasteinrichtung (9) am Gurtaufroller (1) vorgesehen ist.

4. Rückhaltevorrichtung nach einem der Ansprüche 1 bis 3, dadurch gekennzeichnet, dass eine zweite Abtasteinrichtung (10) zur Abtastung der Zugkraft, welche an dem am Fahrzeuginsassen anliegenden Gurtband (Schulter- und Beckengurt) wirkt, vorgesehen ist, und dass der Elektromotor (4) ferner in Abhängigkeit von dieser gemessenen Zugkraft angesteuert ist.

5. Rückhaltevorrichtung nach einem der Ansprüche 1 bis 4, dadurch gekennzeichnet, dass der Elektromotor (4) in Abhängigkeit von einem Precrash-Sensor (13) für eine Gurtbandvorstraffung des nicht aufgeblasenen Sicherheitsgurtes angesteuert ist.

6. Rückhaltevorrichtung nach Anspruch 5, dadurch gekennzeichnet, dass die vom Precrash-Sensor (13) verursachte Vorstraffung nach einem bestimmten Zeitablauf aufgehoben ist, wenn von einem Crash-Sensor (18) kein Signal an die Steuereinrichtung (16) geliefert wird.

7. Rückhaltevorrichtung nach einem der Ansprüche 1 bis 6, dadurch gekennzeichnet, dass in Abhängigkeit von einem Überroll- oder Zweitunfallsensor (14) der Elektromotor (4) zur Gurtbandstraffung des zumindest am Fahrzeuginsassen infolge des Aufblasens mit verbreiteter Fläche anliegenden Gurtbandes ansteuerbar ist.

8. Rückhaltevorrichtung nach einem der Ansprüche 1 bis 7, dadurch gekennzeichnet, dass der Elektromotor (4) in Reihenanordnung mit der Triebfeder (12) an die Gurtspule (3) anschließbar ist.

9. Rückhaltevorrichtung nach Anspruch 8, dadurch gekennzeichnet, dass die Triebfeder (12) auf Block wickelbar ist.

10. Rückhaltevorrichtung nach Anspruch 1, dadurch gekennzeichnet, dass der Elektromotor (4) über eine die Triebfeder (12) überbrückende Kupplung (28) an die Gurtspule (3) anschließbar ist.

11. Rückhaltevorrichtung nach Anspruch 10, dadurch gekennzeichnet, dass der Elektromotor (4) mit einem beim lastbegrenzenden Gurtbandauszug beweglichen Teil der Gurtspule (3) verbindbar ist.

12. Rückhaltevorrichtung nach Anspruch 10 oder 11, dadurch gekennzeichnet, dass das Einrücken der Kupplung (28) durch Blockierung des beim lastbegrenzenden Gurtbandauszug festgehaltenen Gurtspulenteils initiiert ist.

13. Rückhaltevorrichtung nach einem der Ansprüche 1 bis 12, dadurch gekennzeichnet, dass ein Rotor (6) koaxial zur Gurtspulenachse (5) am Gurtaufrollerrahmen (29) drehbar gelagert ist.

14. Rückhaltevorrichtung nach Anspruch 13, dadurch gekennzeichnet, dass der Rotor (6) der Rotor des Elektromotors (4) ist, dass Statorpole (7) des Elektromotors (4) auf einem innenliegenden Radius und am Rotor (6) befestigte Rotorpole (8) auf einem außenliegenden Radius koaxial zur Gurtspulenachse (5) angeordnet sind.

15. Rückhaltevorrichtung insbesondere nach einem der Ansprüche 1 bis 14, dadurch gekennzeichnet, dass der Elektromotor (4) über das Untersetzungsgetriebe (5) parallel zur Triebfeder (12) an die Gurtspule (3) ankoppelbar ist.

16. Rückhaltevorrichtung nach Anspruch 15, dadurch gekennzeichnet, dass der Elektromotor (14) für einen Schnellaufwickelbetrieb zum Bewegen des aufblasbaren Sicherheitsgurtes (2) in die Parkposition an die Gurtspule ankoppelbar ist.
